# EUROPEAN PATENT SPECIFICATION

(11) **EP 0 593 820 B1**
(45) Date of publication and mention of the grant of the patent: **17.09.1997**
(21) Application number: 92203239.6
(22) Date of filing: 23.10.1992
(51) Int. Cl.: G09F 11/23, G09F 3/20

(54) **Hinged or rotating connection**
Schwenkbare oder rotierende Verbindung
Connexion articulée ou en rotation

(43) Date of publication of application: 27.04.1994
(73) Proprietor: ALPHENAAR STANSEN BV., NL-1521 NC Wormerveer (NL)
(72) Inventor: Dekker, Nicolaas Petrus, NL-1521 NC Wormveer (NL)
(74) Representative: Koomen, M.J.I.

(56) References cited:
- DE-A- 3 244 889
- DE-A- 3 309 090
- FR-A- 2 444 985
- NL-A- 9 100 821
- US-A- 3 604 134

## Description

The present invention relates to a hinged or rotating connection between elements closely placed on one another, more in particular of cardboard or pasteboard, with two outer elements and at least one inner element placed in between.

Such a hinged or rotating connection is applied for instance with respect to information slides, in which an information disc containing data is placed in between two cover sheets, and which data may be perceived through windows in one or both of the cover sheets.

With this known hinged or rotating connection the connection between both the outer elements and the inner element is provided by means of a metal circular staple, which is taken through openings provided in the elements, and of which the outer edges are subsequently collared.

The application of the circular staple and the collaring of the outer edges to form a connection between the elements is a relatively long-winded and time-consuming job causing this known hinged or rotating connection to be costly.

From DE-A-3 309 090 is known a hinged or rotating connection between elements closely placed on one another, with two outer elements and at least one inner element placed between, wherein the inner element is formed by an inner part and an outer part, which outer part can rotate around the inner part, while the outer elements are glued to the surfaces of the inner part.

From US-A-3 604 134 is further known a hinged or rotating connection between elements closely placed on one another, with two outer elements and at least one inner element placed between, wherein the inner element is formed by an inner part and an outer part, which outer part can rotate around the inner part, while the outer elements are provided with central protuberances, the surfaces of which are glued to the surfaces of the inner part.

The invention aims to provide an improved hinged or rotating connection.

The hinged or rotating connection according to the invention is formed by two outer elements and at least one inner element placed in between, wherein in at least one outer element a central area is embossed so as to form a cylindrical protuberance, and is characterized in that the inner element is provided with a central hole, into which said protuberance is mounted so that the inner element may hinge or rotate around it, while the upper surface of the protuberance is glued to the second outer element.

With the hinged or rotating connection according to the invention the axis of the hinge is thus formed out of the material of an outer element, which is subsequently glued onto the other outer element, so that the manufacture of the connection may be carried out completely automatically, mechanically and in one operational step, by means of which a very inexpensive and moreover aesthetical connection between the elements is provided.

According to another characteristic of the hinged or rotating connection according to the invention, the second outer element is also provided with an embossed protuberance, of which the upper surface is glued to the upper surface of the first outer element while enclosing the inner element.

In a favourable manner the hinged or rotating connection according to the invention may be formed of one single strip of material, in which folding lines are provided, by means of which the strip of material is devided into three segments, and of which two segments are destined to form the outer elements and of which the third segment is destined to form the inner element, while in one or both of the outer elements a protuberance is formed, about which then the inner element, which is provided with a central hole, is folded, and over which subsequently the second outer element is folded and is glued to the head surface of the protuberance, or with both the head surfaces of the protuberances being glued to one another.

In an embodiment of the hinged or rotating connection according to the invention, one of the outer elements has the shape of a cover sheet, and the other outer element has the shape of a disc-shaped securing part, the size of which is considerably smaller than that of the disc-shaped inner element.

In a further working out of this embodiment, the securing part is partly punched loose from the inner element and is subsequently out of the surface of the inner element folded over in to connection with the cover sheet and glued to the cover sheet, whereby the securing part is torn loose from the inner element by the rotating of the inner element with respect to the cover sheet.

In this embodiment in which the securing part is thus punched from the inner element, a substantial saving of material is obtained.

In a preferred embodiment of the hinged or rotating connection according to the invention, both the outer elements have the shape of cover sheets, which, except for windows provided in a cover sheet, cover the disc-shaped inner element.

The invention will now be explained more closely with reference to the accompanying drawing of an example of an embodiment.

Fig. 1 is a front view of an information slide in which the invented rotating connection is applied.

Fig. 2 is a cross section along the lines a-a of Fig. 1.

Fig. 3 is an enlarged view of the applied rotating connection in a taken apart condition.

Fig. 4 is the same rotating connection in an assembled condition.

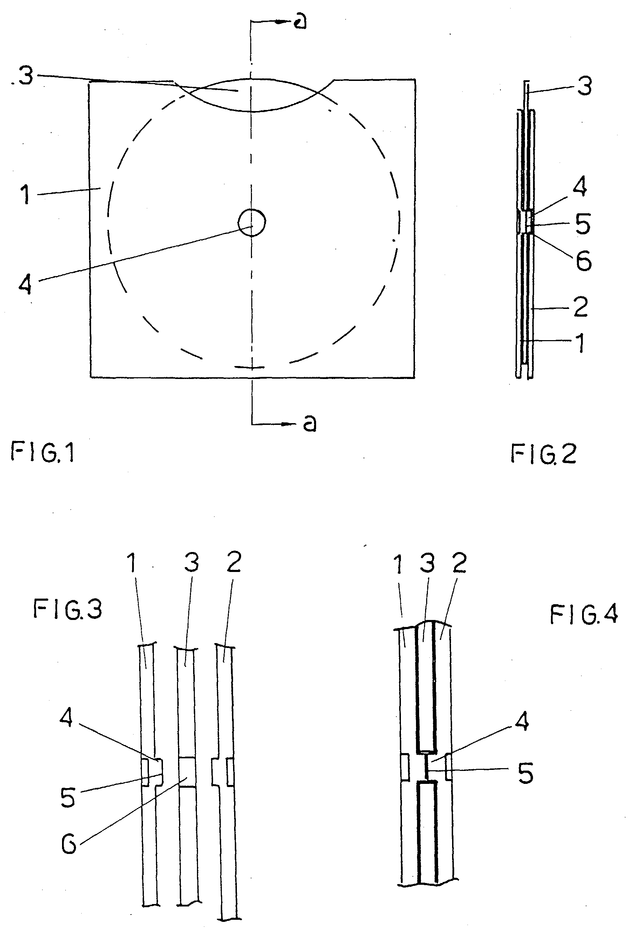

As is shown in Fig. 1 and Fig. 2, the information slide is formed out of two cover sheets 1 and 2, in between which a disc-shaped information disc 3 is locked.
Both the cover sheets are provided with cylindrical protuberances 4 which are directed towards one another, and of which the head surfaces 5 are glued to one another and jointly form a cylindrical axis for the central hole 6 of the information slide 3.

As is shown in Fig. 3 both the cover sheets 1 and 2 are provided with the cylindrical protuberances 4 which are directed towards one another, in between which the information slide 3, which is provided with a central hole, is present.

In Fig. 4 the entirety of the cover sheets 1 and 2 and the information slide 3 according to Fig. 3 is assembled, and whereby the head surfaces 5 of both the protuberances 4 are glued to one another while enclosing the information slide 3.

As is generally known, text and/or images (not shown in the drawing) are applied to the information slide 3 which may become visible through windows (also not shown in the drawing) provided in a cover sheet.

## Claims

1. Hinged or rotating connection between elements closely placed on one another, more in particular of cardboard or pasteboard, with two outer elements [1, 2] and at least one inner element [3] placed in between, wherein in at least one outer element a central area is embossed so as to form a cylindrical protuberance [4], characterized in that the inner element [3] is provided with a central hole [6], into which said protuberance [4] is mounted so that the inner element [3] may hinge or rotate around it, while the upper surface [5] of the protuberance [4] is glued to the second outer element [1,2].

2. Hinged or rotating connection according to claim 1, characterised in that the second outer element [1, 2] is also provided with an embossed protuberance [4], of which the upper surface [5] is glued to the upper surface [5] of the first outer element [1, 2] while enclosing the inner element [3].

3. Hinged or rotating connection according to claim 1 or 2, characterised in that one of the outer elements [1, 2] has the shape of a cover sheet and the other outer element has the shape of a disc-shaped securing part the size of which is smaller than that of the disc-shaped inner element [3].

4. Hinged or rotating connection according to claim 3, characterised in that the securing part is partly punched loose from the inner element [3] and subsequently is folded over out of the surface of the inner element [3] in to connection with the cover sheet [1, 2].

5. Hinged or rotating connection according to any of the preceding claims, characterised in that both the outer elements [1, 2] have the shape of cover sheets which, except for windows provided in a cover sheet, cover the disc-shaped inner element [3].

## Patentansprüche

1. Schwenkbare oder rotierende Verbindung zwischen eng aneinander angeordneten Elementen, insbesondere aus Karton oder Pappe, mit zwei äußeren Elementen (1, 2) und wenigstens einem dazwischen angeordneten inneren Element (3), wobei in wenigstens einem äußeren Element ein mittiger Bereich geprägt ist derart, daß ein zylindrischer Vorsprung (4) gebildet wird, **dadurch gekennzeichnet**, daß das innere Element (3) mit einem mittigen Loch (6) versehen ist, in welchem der Vorsprung (4) gelagert ist, so daß das innere Element (3) um den Vorsprung schwenkbar oder rotierbar ist, während die obere Oberfläche (5) des Vorsprunges (4) mit dem zweiten äußeren Element (1, 2) verklebt ist.

2. Schwenkbare oder rotierende Verbindung gemäß Anspruch 1, **dadurch gekennzeichnet**, daß das zweite äußere Element (1, 2) auch mit einem geprägten Vorsprung (4) versehen ist, dessen obere Oberfläche (5) mit der oberen Oberfläche (5) des ersten äußeren Elementes (1, 2) verklebt ist, wobei das innere Element (3) eingeschlossen ist.

3. Schwenkbare oder rotierende Verbindung nach Anspruch 1 oder 2, **dadurch gekennzeichnet**, daß eines der äußeren Elemente (1, 2) die Form einer Abdecklage hat und das andere äußere Element die Form eines scheibenförmigen Sicherungsteiles hat, dessen Größe kleiner ist als die des scheibenförmigen inneren Elementes (3).

4. Schwenkbare oder rotierende Verbindung nach Anspruch 3, **dadurch gekennzeichnet**, daß das Sicherungsteil vom inneren Element (3) teilweise losgestanzt ist und danach aus der Oberfläche des inneren Elementes (3) in die Verbindung mit der Abdecklage (1, 2) herausgefaltet wird.

5. Schwenkbare oder rotierende Verbindung nach einem der vorhergehenden Ansprüche, **dadurch gekennzeichnet**, daß beide äußeren Elemente (1, 2) die Form von Abdecklagen aufweisen, die, abgesehen von in einer Abdecklage angebrachten Fenstern, das scheibenförmige innere Element (3) abdecken.

## Revendications

1. Connexion articulée ou pivotante entre des éléments superposés, proches l'un de l'autre, en particulier en carton, comprenant deux éléments extérieurs (1, 2) et au moins un élément intérieur (3) disposé entre les éléments extérieurs, dans laquelle est formée dans au moins un élément extérieur une protubérance cylindrique (4), caractérisée en ce que l'élément intérieur (3) est percé d'un trou central (6) dans lequel est incluse ladite protubérance de sorte que l'élément intérieur (3) puise pivoter ou être articulé autour de celle-ci, alors que, la surface supérieure (5) de la protubérance (4) est collée sur le second élément extérieur (1, 2).

2. Connexion articulée ou pivotante selon la revendication 1, caractérisée en ce que le second élément extérieur (1, 2) est également pourvu d'une protubérance (4) sur la surface supérieure (5) de laquelle est collée la protubérance de l'autre élément extérieur (1, 2) en enfermant l'élément intérieur (3).

3. Connexion articulée ou pivotante selon l'une des revendications 1 ou 2, caractérisée en ce que l'un des éléments extérieurs (1, 2) a la forme d'une feuille de couverture et l'autre élément extérieur la forme d'une partie de fixation en disque dont la taille est plus petite que celle de l'élément intérieur (3) en forme de disque.

4. Connexion articulée ou pivotante selon la revendication 3, caractérisée en ce que la partie de fixation est partiellement poinçonnée à partir de l'élément intérieur (3) et est ensuite pliée au dessus de la surface de l'élément intérieur (3) en connexion avec la feuille de couverture (1, 2).

5. Connexion articulée ou pivotante selon l'une quelconque des revendications précédentes, caractérisée en ce que les deux éléments extérieurs (1, 2) ont la forme de feuilles de couverture, qui, à l'exception des fenêtres prévues dans la feuille de couverture recouvrent l'élément intérieur (3) en forme de disque.
